# EUROPÄISCHE PATENTSCHRIFT

(11) **EP 1 351 340 B1**
(45) Veröffentlichungstag und Bekanntmachung des Hinweises auf die Patenterteilung: **12.04.2006**
(21) Anmeldenummer: 03001078.9
(22) Anmeldetag: 18.01.2003
(51) Int. Cl.: H01R 13/447, H01R 13/52, B60D 1/62, H01R 13/717, H01R 13/66, H01R 13/629, B60D 1/52

(54) **Steckdose für elektrische Steckverbindungen**
Socket for electrical connectors
Prise pour connecteurs électriques

(30) Priorität: 20.03.2002 DE 20204423 U
(43) Veröffentlichungstag der Anmeldung: 08.10.2003
(60) Teilanmeldung: 05001650.0
(73) Patentinhaber: ERICH JAEGER GmbH & Co. KG, 61169 Friedberg (DE)
(72) Erfinder: Wiese, Wolfgang, 61267 Neu-Anspuch (DE); Ruebsam, Carsten, 36088 Hünfeld (DE)
(74) Vertreter: KEIL & SCHAAFHAUSEN Patentanwälte

(56) Entgegenhaltungen:
- EP-A- 0 872 364
- EP-A- 1 160 104
- DE-A- 10 027 571
- DE-A- 19 936 709
- DE-C- 19 525 843
- DE-C- 19 835 297
- DE-U- 8 613 221
- DE-U- 8 913 061
- GB-A- 2 363 262
- PATENT ABSTRACTS OF JAPAN vol. 1995, no. 02, 31. März 1995 (1995-03-31) & JP 06 325834 A (SUMITOMO WIRING SYST LTD), 25. November 1994 (1994-11-25)

## Beschreibung

Die Erfindung bezieht sich auf eine Steckdose nach dem Oberbegriff des Anspruchs.

Aus der EP 1 006 624 A2 ist eine Steckdose bekannt, bei welcher, um den heutigen Anforderungen an funktionsgerechte vielfältige Signalübertragung von Zugfahrzeug auf Anhängerfahrzeug gerecht zu werden, in dem Dosengehäuse ein Elektronikmodul zur Funktionssignalübertragung zwischen Zug- und Anhängerfahrzeug, wie bspw. für die Überwachung und/oder die Fehlererkennung bzw. die Fehleranzeige der Anhängerfunktion bzw. als Netzknoten für BUS-Systeme, integriert ist.

Aus der DE 89 13 061 U1 ist bspw. eine Steckdose für elektrische Steckvorrichtungen bekannt, welche bspw. für Motorräder dem Anschließen von Handleuchten, Kennleuchten, Rundumlicht, Visieren oder sonstigen elektrischen Einrichtungen dient. Hierbei soll trotz Einhandbedienung das Eindringen von Schmutz oder Feuchtigkeit in das Dosengehäuse dadurch vermieden werden, dass eine den Verschlussdeckel in Öffnungsstellung verriegelnde und mittels eines in den Bewegungsweg des Steckers ragenden Betätigungselement entriegelbare Verriegelungseinrichtung vorgesehen ist. Diese Steckdose dient jedoch nicht der elektrischen Steckverbindung zwischen einem Zug- und einem Anhängerfahrzeug.

Aus der DE 195 25 843 C1 ist eine deckellose Steckdose mit einer in der Steckdose angeordneten Beleuchtungseinrichtung bekannt, in welcher ein Bewegungsmelder angeordnet ist, der die Beleuchtungseinrichtung aktiviert, wenn diese Bewegungen im Umfeld der Steckdose registriert. Zusätzlich kann die Steckdose noch mit einem Dämmerungssensor ausgestattet sein, so dass die Beleuchtungseinrichtung nur dann eingeschaltet wird, wenn es die Lichtverhältnisse erfordern.

Aus der DE 198 35 297 C1 ist eine Kfz-Anbausteckdose mit Beleuchtungsmittel im Deckel bekannt, welche für die notwendig Ausleuchtung des Steckdoseninneren sowie des einzusetzenden Steckers selbst sorgen und damit ein schnelles und sicheres Einführen des Steckers ermöglichen soll. Die Ausleuchtung des Doseninnenraums ist hierbei unbefriedigend, zumal eine Abhängigkeit von der Winkelstellung des Deckels relativ zu dem Dosengehäuse besteht.

Aus den Patent Abstracts of Japan Vol. 1995, No. 02, 31. März 1995 (JP 06325834 A) ist an einem Automobil eine mit einer Tür versehene Kammer vorgesehen, in welcher sich eine Steckdose und eine gesonderte Lampe befinden. Beim Öffnen der Tür schaltet sich die Lampe ein, um das Innere der Kammer auszuleuchten.

Aufgabe der vorliegenden Erfindung ist es, eine Steckdose der eingangs genannten Gattung mit zusätzlichen Einrichtungen auszustatten, welche die Funktions- und/oder Bedienungssicherheit verbessern.

Bei einer Steckdose der eingangs genannten Art wird die gestellte Aufgabe mit den Merkmalen des kennzeichnenden Teils des Anspruchs 1 gelöst. Auf diese Weise wird gewährleistet, dass die Energie verbrauchende Beleuchtung im richtigen Moment eingeschaltet wird aber nur so lange eingeschaltet bleibt, wie sie wirklich benötigt wird.

Die Innenraumbeleuchtung, welche der Findung des Steckkontaktbereiches dient und/oder die Außenraumbeleuchtung (welche der Findung der Steckdose selbst dient) kann auch mittels eines gesonderten Schalters von Hand oder selbsttätig schaltbar sein. Eine noch bessere Findungsfreundlichkeit der Steckdose bzw. des Einsteckbereiches wird dann gewährleistet, wenn sich die Innenraumbeleuchtung und/oder Außenraumbeleuchtung aufgrund eines Näherungsschalters in dem Deckel und/oder dem Dosengehäuse einschaltet.

Dies kann z. B. durch Ausklappen oder Ausfahren eines Fahrzeugteils, z. B. eines Bleches oder Kupplungshalses einer elektromechanisch oder von Hand in Betriebsposition verstellbaren Anhängerkupplung, an welchem das Dosengehäuse befestigt ist, geschehen.

Der Schalter kann auch durch Einstecken des abnehmbaren Kupplungshalses einer Anhängerkupplung in seine Betriebsposition an dem Zugfahrzeug betätigbar sein.

Insbesondere in diesen Fällen kann vorgesehen sein, dass sich zur Energieersparnis die Innenraumbeleuchtung und/oder Außenraumbeleuchtung aufgrund eines Zeitgliedes in vorgegebenem, ggf. einstellbarem zeitlichen Abstand von ihrem Einschalten wieder ausschaltet. Das Zeitglied kann so einstellbar sein, dass die üblicherweise benötigte Zeit für das Einstecken eines Steckers in die Steckdose berücksichtigt ist.

Die Innenraumbeleuchtung und/oder die Außenraumbeleuchtung können bspw. ein LED- oder dgl. energiesparendes Leuchtmittel aufweisen.

Um eine hinreichende Ausleuchtung zu erhalten, wird in Weiterbildung dieses Erfindungsgedankens vorgesehen, dass das Leuchtmittel mit einem Lichtleiter zur Verbreitung des Lichtes in dem Doseninnenraum und/oder zur Leitung des Lichtes aus dem Doseninnenraum in den Dosenaußenraum zusammenwirkt. Aufgrund der gleichmäßigen Ausleuchtung des Doseninnenraumes können dann die Stromkontakte besser gefunden werden.

Als Lichtleiter kann bspw. der Dichtungsring dienen, welcher ohnehin zur Abdichtung des Steckers gegen den in dem Dosengehäuse vorgesehenen Kontaktträgereinsatz oder das Dosengehäuse selbst vorgesehen ist. In diesem Fall besteht der Dichtring aus einem lichtdurchlässigen Gummi- oder Kunststoffmaterial, wie einem Polymethylmetacrylat.

Zum einfachen Auffinden des Steckkontaktbereiches und/oder der Steckdose selbst können der Deckel und/oder das Dosengehäuse auch ganz oder teilweise aus transparentem und/oder fluoreszierendem Material bestehen.

Als weitere Verbesserung wird ferner vorgeschlagen, Mittel zur Abstandskontrolle in dem Deckel und/oder an dem Dosengehäuse vorzusehen. Auf diese Weise ist es möglich, Zugfahrzeuge, welche mit einer erfindungsgemäßen Steckdose ausgestattet sind, zusätzlich mit einer Abstandskontrolle auszustatten, welche bspw. als Parkhilfe nützlich ist.

Wenn eine Steckdose der eingangs genannten Art bei einem Zugfahrzeug mit Anhängerkupplung vorgesehen ist, kann das Dosengehäuse erfindungsgemäß in dem Kupplungshals einer elektromechanisch oder von Hand betätigbaren Anhängerkupplung integriert sein.

Wenn die Steckdose nicht bereits selbst eine Beleuchtungseinrichtung der oben erfindungsgemäß vorgeschlagenen Art aufweist, ist es hierbei von Vorteil, wenn an dem Kupplungshals eine z. B. von der Steckdose aus mit Strom versorgte Warn- und/oder Beleuchtungseinrichtung vorgesehen ist. Die Warneinrichtung kann auch akustischer Art sein. Auf diese Weise kann (auch) der Kupplungshals bei Dunkelheit besser gefunden werden. Die Warneinrichtung ist insbesondere bei Betätigung der Anhängerkupplung aktiv, so dass Gefahrenzustände ausgeschlossen werden.

Die Funktions- und/oder Bedienungssicherheit wird durch Mittel zum Verrasten des Deckels bei Erreichen seiner Öffnungsstellung und Mittel zum Entrasten des Deckels bei Erreichen der Einsteckstellung des Steckers weiter verbessert. Auf diese Weise ist nämlich eine Einhandbedienung möglich, wobei sichergestellt ist, dass der Stecker immer vollständig in die Steckdose eingesteckt ist.

Hierbei weisen vorzugsweise die Mittel zum Verrasten des Deckels eine zusammenwirkende Kombination aus Rastvorsprung und Rastrücksprung im rückwärtigen Bereich von Deckel und Dosengehäuse auf. Unter "rückwärtigen Bereich" wird derjenige Bereich verstanden, in welchem sich die Schwenkachse des Deckels befindet.

Die Mittel zum Entrasten des Deckels können dabei einen auf die Mittel zum Verrasten des Deckels einwirkenden, von dem Stecker bei dessen Einstecken betätigbaren Hebelmechanismus aufweisen, so dass eine dauerhaft zuverlässige Funktion gesichert ist. Mit dieser Lösung wird auch gewährleistet, dass der Deckel schon beim Einstecken des Steckers wieder freigegeben wird und sich unter der Wirkung der Rückstellfeder gegen die üblicherweise bei derartigen Steckvorrichtungen an dem Stecker vorhandene Auflageplattform anlegen kann, so dass die Innenseite des Deckels während des Fahrbetriebs gegen Verschmutzen geschützt bleibt.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnungen.

Es zeigen:
- Fig. 1a: in schematischer Seitenansicht eine die Erfindung aufweisende Steckdose mit in Öffnungsstellung verrastbaren und beim vollständigen Einstecken des Steckers wieder entrastbaren Deckel,
- Fig. 1b: einen Teilschnitt der Steckdose gemäß Fig. 1a im Bereich der Anlenkung des Deckels an dem Dosengehäuse,
- Fig. 2a: eine erfindungsgemäße Steckdose (mit geöffnetem Deckel und eingestecktem Stecker) der erfindungsgemäßen Art, welche mit einer Innenraumbeleuchtung ausgestattet ist,
- Fig. 2b: einen teilweise weggebrochenen Vertikalschnitt der Steckdose gemäß Fig. 2a bei geschlossenem Deckel,
- Fig. 3: in schematischer Seitenansicht eine Steckdose der erfindungsgemäßen Art mit Innenraumbeleuchtung und Außenraumbeleuchtung,
- Fig. 4a und 4b: in Seitenansicht und in Draufsicht eine erfindungsgemäße Steckdose mit Abstandskontrolleinrichtung, und
- Fig. 5: in Seitenansicht schematisch den Kupplungshals einer Anhängervorrichtung, in welche eine Steckdose der erfindungsgemäßen Art integriert und welcher eine Warn- und Beleuchtungseinrichtung zugeordnet ist.

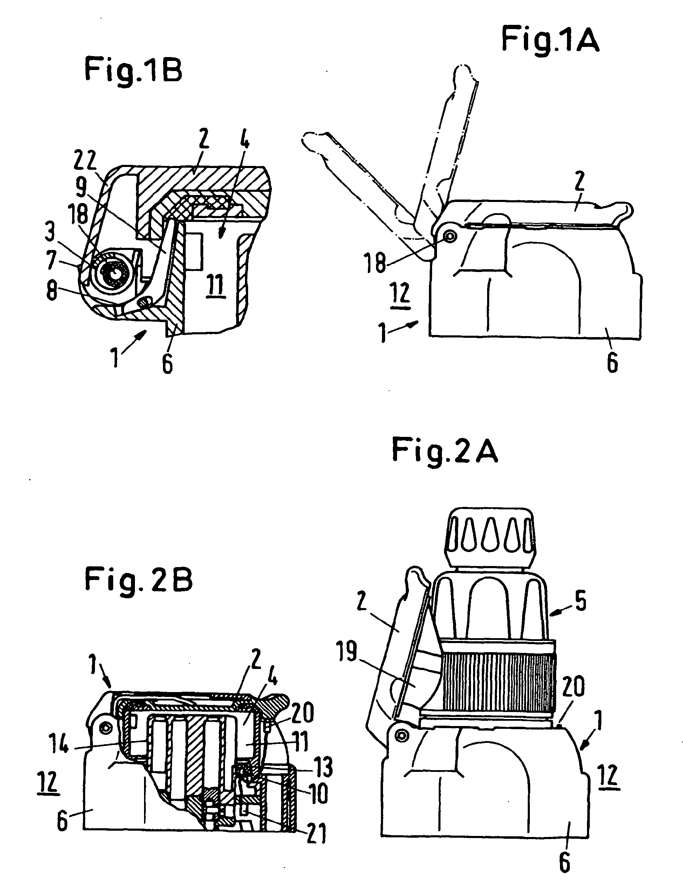

Die Steckdose 1 gemäß Fig. 1a weist, wie auch die übrigen weiter unten erörterten Steckdosen der erfindungsgemäßen Art, ein Dosengehäuse 6 mit einer oberen Einstecköffnung 4 auf, welche mit einem Deckel 2 verschließbar ist. Zu diesem Zweck ist der Deckel 2 um eine horizontale Achse 18 im hinteren Bereich des Dosengehäuses 6 schwenkbar gelagert und kann aus der mit ausgezogenen Linien dargestellte Schließstellung gegen die Wirkung einer Rückstellfeder 3 in eine Öffnungsstellung geschwenkt werden, wie dies mit strickpunktierten Linien angedeutet ist. Dabei kann der Deckel 2 eine Zwischenstellung einnehmen, in welcher er, wie bspw. aus Fig. 2a ersichtlich, gegen eine Auflageplattform 19 des in die Steckdose 1 eingesteckten Steckers 5 anliegen kann, um die Innenseite des Deckels 2 im Fahrbetrieb gegen Verschmutzung zu schützen.

Aus Fig. 1b ist ersichtlich, dass der Deckel 2 an der Außenseite einer hinteren Lasche einen Rastvorsprung 7 aufweist, welcher beim Überführen des Deckels 2 in die äußerste Öffnungsstellung unter elastischem Ausweichen der Lasche 22 in einen Rastrücksprung 8 an dem Dosengehäuse 6 einrastet. Auf der Innenseite der Schwenkachse 18 ist ein einen Kipphebel 9 aufweisender Hebelmechanismus vorgesehen, welcher in seiner einen Schwenkstellung etwas über die Oberkante des Dosengehäuses 6 hinausragt. Auf diesen vorspringenden Teil des Winkelhebels 9 wirkt der Stecker 5 ein, wenn er vollständig in die Steckdose 1 eingesteckt wird. Hierdurch wird die Verrastung des Deckels 2 gelöst. Der Deckel 2 kann dann unter der Wirkung der Rückstellfeder 3 in die bspw. in Fig. 2a gezeigte Lage zurückschwenken, in welcher der Deckel 2 an der Auflageplattform 19 des Steckers 5 zu liegen kommt. Auf diese Weise ist eine sichere Einhandbedienung möglich.

Die Steckdose 1 gemäß den Fig. 2a und 2b ist mit einem Leuchtmittel 10, z. B. einem LED-Leuchtmittel 10, im Doseninnenraum 11 ausgestattet. Das Leuchtmittel 10 wird von einem nach unten weisenden Stecker 21 mit Strom versorgt und ist mit einem Schalter 20 versehen, welcher, wie insbesondere aus Fig. 2a ersichtlich, aus dem oberen Rand des Dosengehäuses 6 hinausragt, an welchem der Deckel 2 in seiner Schließstellung anliegt. Die Schaltung ist dabei so getroffen, dass bei geschlossenem Deckel 2 die Leucht 10 abgeschaltet ist und mit dem Öffnen des Deckels 2 eingeschaltet wird. Auf diese Weise wird beim Öffnen des Deckels 2 der Doseninnenraum 11 beleuchtet, so dass die Kontakte, in welche der Stecker 5 eingeführt werden muss, auch bei Dunkelheit gut sichtbar sind. Zur besseren Ausleuchtung des Doseninnenraums 11 kann das Leuchtmittel 10 mit dem Dichtungsring zusammenarbeiten, an welchen sich der Stecker 5 beim Einstecken in die Steckdose 1 stirnseitig anlegt. In diesem Fall ist die Dichtung aus transparentem Material hergestellt, so dass sie als Lichtleiter 13 wirkt, wodurch der Doseninnenraum 11 noch besser ausgeleuchtet wird und die Dichtung, welche die Kontakte des Kontaktträgereinsatzes 14 umgibt, eine noch bessere Orientierung für das Einstecken des Steckers 5 bietet.

Bei der Ausführungsform mit Leuchtmittel 10 im Doseninnenraum 11 können auch der Deckel 2 und/oder das Dosengehäuse 6 wenigstens bereichsweise aus transparentem und/oder fluoreszierendem Material bestehen, so dass auch Licht in den Dosenaußenraum 12 fällt. In diesem Fall kann es zweckmäßig sein, das Leuchtmittel 10 schon vor dem Öffnen des Deckels 2 anzuschalten, wofür bspw. ein gesonderter Schalter oder ein Näherungsschalter in dem Deckel 2 oder an dem Dosengehäuse 6 vorgesehen sein kann. Wenn der transparente und/oder fluoreszierende Bereich des Deckels 2 oder Dosengehäuses 6 ringförmig ausgebildet ist, kann die Lage der Steckdose 1 bei Dunkelheit von allen Seiten gut erkannt werden.

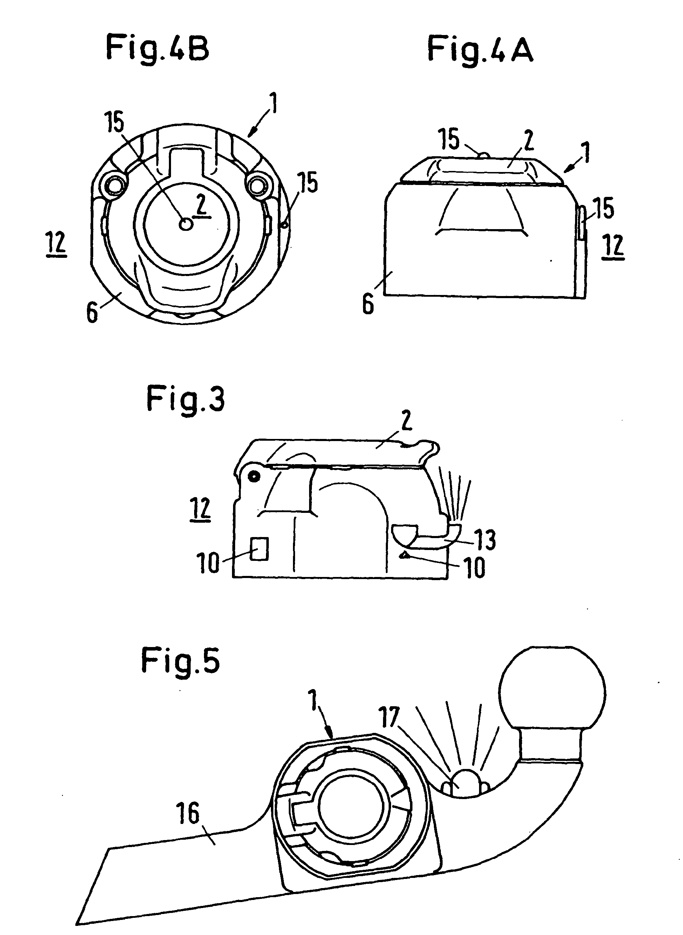

Am Beispiel der Fig. 3 wird veranschaulicht, dass von dem in dem Doseninnenraum 11 geschützt vorgesehenen Leuchtmittel 10 über einen Lichtleiter 13 auch Licht gezielt in den Dosenaußenraum 12 geführt werden kann.

Die erfindungsgemäße Steckdose 1 nach den Fig. 4a und 4b ist wahlweise mit wenigstens einen Abstandssensor 15 aufweisenden Mitteln zur Abstandskontrolle im Deckel 2 und/oder an einem Seitenansatz des Dosengehäuses 6 ausgestattet. Auf diese Weise kann ein Zugfahrzeug, welches z. B. nachträglich mit einer solchen Steckdose 1 ausgestattet wird, gleichzeitig eine Einrichtung zur Abstandskontrolle erhalten, was insbesondere beim Einparken hilfreich ist.

Gemäß Fig. 5 ist eine erfindungsgemäße Steckdose 1 in den Kugelhals 16 einer Anhängerkupplung integriert. Gleichzeitig ist an dem Kupplungshals 16 eine Warn- und/oder Beleuchtungseinrichtung 17 vorgesehen, welche bei ungünstigen Lichtverhältnissen sowohl den Kupplungshals 16 als auch die Steckdose 1 sichtbar machen kann, wenn letztere nicht selbst mit einer Beleuchtungseinrichtung ausgestattet ist. Die Warn- und/oder Beleuchtungseinrichtung 17 kann über die Steckdose 1 mit Strom versorgt werden, wenn der Kupplungshals 16 in seine Betriebsposition überführt wird.

### Bezugszeichenliste:

- 1: Steckdose
- 2: Deckel
- 3: Rückstellfeder
- 4: Einstecköffnung
- 5: Stecker
- 6: Dosengehäuse
- 7: Rastvorsprung
- 8: Rastrücksprung
- 9: Hebelmechanismus
- 10: Leuchtmittel
- 11: Doseninnenraum
- 12: Dosenaußenraum
- 13: Lichtleiter, transparenter Gummiring
- 14: Kontaktträgereinsatz
- 15: Abstandssensor
- 16: Kupplungshals
- 17: Warn- und/oder Beleuchtungseinrichtung
- 18: Schwenkachse
- 19: Auflageplattform
- 20: Schalter
- 21: Stecker
- 22: Lasche

## Patentansprüche

1. Steckdose, insbesondere Mehrfunktionssteckdose, für elektrische Steckvorrichtungen, z. B. für den Einsatz zwischen Zug- und Anhängerfahrzeug, mit einem einsteckseitig mit einer mittels eines gegen die Wirkung einer Rückstellfeder (3) öffenbaren Deckels (2) verschließbaren Einstecköffnung (4) für einen Stecker (5) versehenen Dosengehäuse (6) mit Mitteln (10) zum Beleuchten des Doseninnenraums (11) (Innenraumbeleuchtung) und mit Mitteln zum Beleuchten des Dosenaußenraums (12) (Außenraumbeleuchtung), wobei sich die in dem Doseninnenraum (11) bzw. dem Dosengehäuse (6) vorgesehene Innenraumbeleuchtung beim Öffnen des Deckels (2) einschaltet und beim Schließen des Deckels (2) ausschaltet, **dadurch gekennzeichnet, dass** sich die Innenraumbeleuchtung auch beim Einstecken des Steckers (5) ausschaltet.

2. Steckdose nach Anspruch 1, **dadurch gekennzeichnet, dass** die Innenraumbeleuchtung und/oder die Außenraumbeleuchtung mittels eines gesonderten Schalters und/oder aufgrund eines Näherungsschalters in dem Deckel (2) und/oder an dem Dosengehäuse (6) schaltbar ist.

3. Steckdose nach Anspruch 2, **dadurch gekennzeichnet, dass** der Schalter durch Ausklappen oder Ausfahren eines Fahrzeugteils, z. B. eines Blechs oder des Kupplungshalses (16) einer elektromechanisch oder von Hand in Betriebsposition verstellbaren Anhängerkupplung, an welchem das Dosengehäuse (6) befestigt ist, betätigbar ist, um die Innenraumbeleuchtung und/oder die Außenraumbeleuchtung einzuschalten.

4. Steckdose nach Anspruch 2 oder 3, **dadurch gekennzeichnet, dass** der Schalter durch Einstecken des abnehmbaren Kupplungshalses (16) einer Anhängerkupplung in seine Betriebsposition an dem Zugfahrzeug betätigbar ist.

5. Steckdose nach einem der Ansprüche 1 bis 4, **dadurch gekennzeichnet, dass** sich die Innenraumbeleuchtung und/oder Außenraumbeleuchtung aufgrund eines Zeitgliedes in vorgegebenem, ggf. einstellbarem zeitlichen Abstand von ihrem Einschalten wieder ausschaltet.

6. Steckdose nach einem der vorhergehenden Ansprüche, **dadurch gekennzeichnet, dass** die innenraumbeleuchtung und/oder die Außenraumbeleuchtung ein LED- oder dgl. energiesparendes Leuchtmittel (10) aufweist.

7. Steckdose nach einem der vorhergehenden Ansprüche, **dadurch gekennzeichnet, dass** das Leuchtmittel (10) mit einem Lichtleiter (13) zur Verbreitung des Lichtes in dem Doseninnenraum (11) und/oder zur Leitung des Lichtes von dem Doseninnenraum (11) in den Dosenaußenraum (12) zusammenwirkt.

8. Steckdose nach Anspruch 7, **dadurch gekennzeichnet, dass** der Lichtleiter (13) von einem Dichtring gebildet ist, welcher der Abdichtung des Steckers (5) gegen den Kontaktträgereinsatz (14) in dem Dosengehäuse (6) und/oder gegen das Dosengehäuse (6) selbst dient.

9. Steckdose nach einem der vorhergehenden Ansprüche, **dadurch gekennzeichnet, dass** der Deckel (2) und/oder das Dosengehäuse (6) ganz oder teilweise aus transparentem und/oder fluoreszierendem Material gefertigt sind/ist.

10. Steckdose nach Anspruch 9, **dadurch gekennzeichnet, dass** der Deckel (2) und/oder das Dosengehäuse (6) mit einem Umfangsring aus transparentem und/oder fluoreszierenden Material ausgestattet sind/ist.

11. Steckdose nach einem der vorhergehenden Ansprüche, **gekennzeichnet durch** Mittel (15) zur Abstandskontrolle in dem Deckel (2) und/oder an dem Dosengehäuse (6).

12. Steckdose nach einem der vorhergehenden Ansprüche, **dadurch gekennzeichnet, dass** das Dosengehäuse (6) in dem Kupplungshals (16) einer elektromechanisch und/oder von Hand betätigbaren Anhängerkupplung integriert ist.

13. Steckdose nach Anspruch 12, **gekennzeichnet durch** eine ihr an dem Kupplungshals (16) zugeordnete und von ihr aus mit Strom versorgbare Warn-und/oder Beleuchtungseinrichtung (17).

14. Steckdose nach einem der vorhergehenden Ansprüche, **gekennzeichnet durch** Mittel (7, 8) zum Verrasten des Deckels (2) in seiner Öffnungsstellung und Mittel zum Entrasten des Deckels (2) bei Erreichen des Einsteckstellung des Steckers (5).

15. Steckdose nach Anspruch 14, **dadurch gekennzeichnet, dass** die Mittel (7, 8) zum Verrasten des Deckels (2) eine zusammenwirkende Kombination aus Rastvorsprung (7) und Rastrücksprung (8) im rückwärtigen Bereich von Deckel (2) und Dosengehäuse (6) aufweisen.

16. Steckdose nach Anspruch 14 oder 15, **dadurch gekennzeichnet, dass** die Mittel (9) zum Entrasten des Deckels (2) einen auf die Mittel (7, 8) zum Verrasten des Deckels (2) einwirkenden, von dem Stecker (5) bei dessen Einstecken betätigbaren Hebelmechanismus (9) aufweist.

## Claims

1. A plug socket, and in particular a multifunctional plug socket, for electric plug-in devices, for example for use between towing vehicle and trailer, comprising a socket housing (6) provided on the plug-in side with an opening (4) for a plug (5) and said opening (4) being closable by means of a cover (2) which is openable against the action of a return spring (3), and comprising means (10) for illuminating the interior (11) of the socket (interior lighting) and means for illuminating the exterior (12) of the socket (exterior lighting), the interior lighting provided in the interior (11) of the socket or in the socket housing (6) switching on when the cover (2) is opened and switching off when the cover (2) is closed, **characterized in that** the interior lighting also switches off when the plug (5) is inserted.

2. A plug socket according to Claim 1, **characterized in that** the interior lighting and/or the exterior lighting can be switched by means of a separate switch and/or via a proximity switch in the cover (2) and/or on the socket housing (6).

3. A plug socket according to Claim 2, **characterized in that**, in order to switch on the interior lighting and/or exterior lighting, the switch can be operated by swinging out or extending a vehicle component, for example a metal plate or the neck (16) of a trailer coupling, which can be moved electromechanically or by hand into the operational position and to which the socket housing (6) is attached.

4. A plug socket according to Claim 2 or 3, **characterized in that** the switch can be operated by inserting the detachable neck (16) of a trailer coupling into its operational position on the towing vehicle.

5. A plug socket according to one of Claims 1 to 4, **characterized in that** the interior lighting and/or exterior lighting, after being switched on, switches off again via a time function element after a predetermined, possibly adjustable interval.

6. A plug socket according to one of the preceding claims, **characterized in that** the interior lighting and/or exterior lighting comprises LED lighting means or similar energy-saving means of illumination (10).

7. A plug socket according to one of the preceding claims, **characterized in that** the lighting means (10) cooperate with a light guide (13) for distributing the light in the interior (11) of the socket and/or for guiding the light from the interior (11) of the socket to the exterior (12) of the socket.

8. A plug socket according to Claim 7, **characterized in that** the light guide (13) is formed by a sealing ring which serves to seal the plug (5) against the contact carrier insert (14) in the socket housing (6) and/or against the socket housing (6) itself.

9. A plug socket according to one of the preceding claims, **characterized in that** the cover (2) and/or the socket housing (6) are/is completely or partly made of transparent and/or fluorescent material.

10. A plug socket according to Claim 9, **characterized in that** the cover (2) and/or the socket housing (6) are/is fitted with a peripheral ring made of transparent and/or fluorescent material.

11. A plug socket according to one of the preceding claims, **characterized by** distance-monitoring means (15) located in the cover (2) and/or on the socket housing (6).

12. A plug socket according to one of the preceding claims, **characterized in that** the socket housing (6) is incorporated into the neck (16) of an electromechanically and/or manually operable trailer coupling.

13. A plug socket according to Claim 12, **characterized by** associated warning and/or lighting means (17) which are located on the coupling neck (16) and can be supplied with current from said plug socket.

14. A plug socket according to one of the preceding claims, **characterized by** means (7, 8) for securing the cover (2) in its open position and means for releasing the cover (2) when the plug (5) has been plugged in.

15. A plug socket according to Claim 14, **characterized in that** the means (7, 8) for securing the cover (2) comprise a cooperating combination of snap-in projection (7) and snap-in recess (8) in the region to the rear of the cover (2) and socket housing (6).

16. A plug socket according to Claim 14 or 15, **characterized in that** the means (9) for releasing the cover (2) comprise a lever mechanism (9) which acts on the means (7, 8) securing the cover (2) and can be operated by the plug (5) upon its insertion.

## Revendications

1. Prise de courant, notamment prise de courant multifonction, pour dispositifs électriques enfichables, par exemple pour l'utilisation entre un véhicule tracteur et un véhicule tracté, avec un boîtier de prise (6) muni du côté de l'enfichage d'une ouverture d'introduction (4) pour une fiche mâle (5), ladite ouverture d'introduction pouvant être fermée par un couvercle (2) pouvant être ouvert contre l'effet d'un ressort de rappel (3), le boîtier de prise (6) étant muni de moyens (10) pour l'éclairage de l'espace intérieur (11) de la prise (éclairage intérieur) et de moyens pour l'éclairage de l'espace extérieur (12) de la prise (éclairage extérieur), l'éclairage intérieur prévu dans l'espace intérieur (11) de la prise ou dans le boîtier de la prise (6) s'allumant au moment de l'ouverture du couvercle (2) et s'éteignant au moment de la fermeture du couvercle (2), **caractérisée en ce que** l'éclairage intérieur s'éteint également lors de l'enfichage de la fiche (5).

2. Prise de courant selon la revendication 1, **caractérisée en ce que** l'éclairage intérieur et/ou l'éclairage extérieur peut être commuté au moyen d'un commutateur séparé et/ou en raison d'un commutateur de proximité dans le couvercle (2) et/ou sur le boîtier de prise (6).

3. Prise de courant selon la revendication 2, **caractérisée en ce que** pour mettre en marche l'éclairage intérieur et/ou l'éclairage extérieur, le commutateur peut être actionné par basculement ou sortie d'une pièce du véhicule, par exemple une tôle ou le col de remorquage (16) d'un dispositif d'attelage de remorque pouvant être déplacé en position d'utilisation par voie électromécanique ou manuellement, et sur laquelle est fixé le boîtier de prise (6).

4. Prise de courant selon la revendication 2 ou 3, **caractérisée en ce que** le commutateur peut être actionné en introduisant le col de remorquage amovible (16) d'un dispositif d'attelage de remorque dans sa position d'utilisation sur le véhicule tracteur.

5. Prise de courant selon l'une des revendications 1 à 4, **caractérisée en ce que** l'éclairage intérieur et/ou l'éclairage extérieur s'éteint à nouveau dans un laps de temps suivant son allumage prédéterminé, éventuellement réglable, en raison d'un système temporisé.

6. Prise de courant selon l'une des revendications précédentes, **caractérisée en ce que** l'éclairage intérieur et/ou l'éclairage extérieur présente des moyens d'éclairage (10) par LED ou d'autres moyens économiques du point de vue énergétique.

7. Prise de courant selon l'une des revendications précédentes, **caractérisée en ce que** les moyens d'éclairage (10) coopèrent avec un guide de lumière (13) pour la propagation de la lumière dans l'espace intérieur (11) et/ou pour guider la lumière de l'espace intérieur (11) de la prise vers l'espace extérieur (12) de la prise.

8. Prise de courant selon la revendication 7, **caractérisée en ce que** le guide de lumière (13) est formé par une rondelle d'étanchéité servant à rendre étanche la fiche (5) par rapport à l'insert porteur de contact (14) dans le boîtier de prise (6) et/ou par rapport au boîtier de prise (6) lui-même.

9. Prise de courant selon l'une des revendications précédentes, **caractérisée en ce que** le couvercle (2) et/ou le boîtier de prise (6) sont/est entièrement ou partiellement réalisé(s) dans un matériau transparent et/ou fluorescent.

10. Prise de courant selon la revendication 9, **caractérisé en ce que** le couvercle (2) et/ou le boîtier de prise (6) sont/est muni(s) d'un anneau circonférentiel en matériau transparent et/ou fluorescent.

11. Prise de courant selon l'une des revendications précédentes, **caractérisée par** des moyens (15) pour le contrôle de distance situés dans le couvercle (2) et/ou sur le boîtier de prise (6).

12. Prise de courant selon l'une des revendications précédentes, **caractérisée en ce que** le boîtier de prise (6) est intégré dans le col de remorquage (16) d'un dispositif d'attelage de remorque pouvant être actionné de façon électromécanique et/ou manuellement.

13. Prise de courant selon la revendication 12, **caractérisée par** un dispositif d'alarme et/ou d'éclairage lui étant associée sur le col de remorquage (16) et pouvant être alimenté à partir de ladite prise en courant.

14. Prise de courant selon l'une des revendications précédentes, **caractérisée par** des moyens (7, 8) pour enclencher le couvercle (2) dans sa position d'ouverture et des moyens pour desenclencher le couvercle (2) lorsque la fiche (5) atteint sa position d'enfichage.

15. Prise de courant selon la revendication 14, **caractérisée en ce que** les moyens (7, 8) pour enclencher le couvercle (2) présentent une combinaison de saillie d'arrêt (7) et d'épaulement d'arrêt (8) coopérant ensemble dans la région arrière du couvercle (2) et du boîtier de prise (6).

16. Prise de courant selon la revendication 14 ou 15, **caractérisée en ce que** les moyens (9) pour désenclencher le couvercle (2) présentent un mécanisme de levier (9) actionnable par la fiche (5) lors de son enfichage et agissant sue les moyens (7, 8) pour enclencher le couvercle (2).
